# EUROPEAN PATENT SPECIFICATION

(11) **EP 1 683 622 B1**
(45) Date of publication and mention of the grant of the patent: **11.05.2011**
(21) Application number: 04818509.4
(22) Date of filing: 12.11.2004
(51) Int. Cl.: B29C 45/74, B29C 45/50, B29C 45/54

(54) **INJECTION DEVICE AND METHOD OF HEATING INJECTION DEVICE**
SPRITZVORRICHTUNG UND VERFAHREN ZUM ERWÄRMEN EINER SPRITZVORRICHTUNG
DISPOSITIF D'INJECTION ET PROCEDE DE CHAUFFAGE DE CE DISPOSITIF D'INJECTION

(30) Priority: 14.11.2003 JP 2003384426
(43) Date of publication of application: 26.07.2006
(73) Proprietor: SUMITOMO HEAVY INDUSTRIES, LTD., Shinagawa-ku, Tokyo 141-8686 (JP)
(72) Inventor: ONISHI, Masashi c/o SUMITOMO HEAVY INDUSTRIES,, Inage-ku, Chiba-shi, Chiba 2630001 (JP)
(74) Representative: Geyer, Ulrich F.
(86) International application number: PCT/JP2004/016840
(87) International publication number: WO 2005/046962

(56) References cited:
- GB-A- 984 426
- JP-A- 5 286 018
- JP-A- 6 335 954
- JP-A- 8 034 034
- JP-A- 8 229 997
- JP-A- 9 011 301
- JP-A- 2003 071 893
- JP-B2- 3 066 139
- JP-U- 63 113 623

## Description

### TECHNICAL FIELD

The present invention relates to an injection apparatus and a heating method for an injection apparatus.

### BACKGROUND ART

Conventionally, in a molding machine such as an injection molding machine, resin (molding material) heated and melted in a heating cylinder is injected under high pressure into a cavity of a mold apparatus so that the cavity is filled with the molten resin. The molten resin is then cooled and solidified within the cavity so as to obtain a molded product. The injection molding apparatus includes a mold apparatus, a mold clamping apparatus, and an injection apparatus. The mold clamping apparatus includes a stationary platen and a movable platen, which is advanced and retreated by means of a cylinder for mold clamping. Thus, mold closing, mold clamping, and mold opening operations of the mold apparatus are performed.

Meanwhile, the injection apparatus includes a heating cylinder for heating and melting resin, and an injection nozzle attached to the front end of the heating cylinder and adapted to inject the molten resin. A screw is disposed within the heating cylinder such that the screw can rotate and can advance and retreat. When the screw is rotated by means of a drive unit disposed at the rear end, the resin is accumulated forward of the screw, and the screw is retreated to a predetermined position, whereby metering of the resin is performed. At that time, the resin is heated and melted within the heating cylinder, and due to the pressure of the resin accumulated forward of the screw, the screw is retreated. The screw is then advanced by means of the drive unit, so that the resin is injected from the injection nozzle. Moreover, a heating apparatus is attached to the circumference of the heating cylinder so as to heat the heating cylinder to a predetermined temperature. In order to quickly heat the heating cylinder to the predetermined temperature through application of a large quantity of heat, there has been proposed an injection apparatus which employs an induction heating apparatus which generate induction current within the heating cylinder itself (see, for example, JP-A-2003 71893).

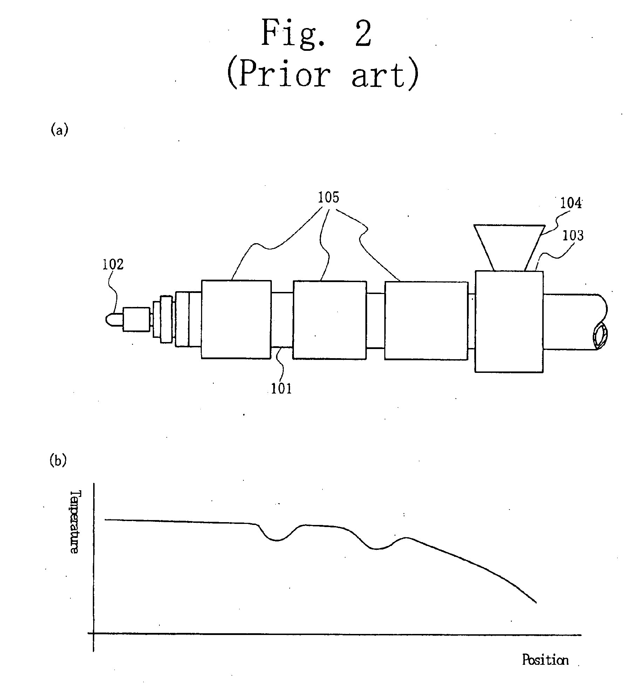

FIGS. 2(a) and 2(b) are views showing a conventional injection apparatus. Notably, FIG. 2(a) is a side view of the injection apparatus, and FIG. 2(b) is a graph showing the temperature distribution of a heating cylinder.

In FIG. 2(a), reference numeral 101 denotes a heating cylinder of an injection apparatus; 102 denotes an injection nozzle attached to the front end of the heating cylinder 101; 103 denotes a cooling apparatus attached to the heating cylinder 101 in the vicinity of an unillustrated resin supply port; 104 denotes a resin supply hopper connected to the resin supply port; and 105 denotes an induction-heating-type heating apparatus attached to the periphery of the heating cylinder 101.

The cooling apparatus 103 is a water jacket through which cooling water flows and which cools the vicinity of the resin supply port of the heating cylinder 101 and a lower end portion of the resin supply hopper 104. In general, material resin supplied from the resin supply hopper 104 to the interior of the heating cylinder 101 assumes the form of pellets. The resin pellets are fed forward (leftward in FIG. 2(a)) within the heating cylinder 101 by means of an unillustrated screw, which rotates within the heating cylinder 101, while being heated and melted. However, when the temperatures at the vicinity of the resin supply port and the lower end portion of the resin supply hopper 104 increase, at least surface portions of the resin pellets melt within the resin supply port and the resin supply hopper 104. As a result, the resin pellets are bonded together to form aggregates, and/or adhere to the inner surface of the resin supply hopper 104, the inner circumferential surface of the heating cylinder 101, and the flight surface of the screw, etc. In such a case, the resin pellets do not move properly, which makes feeding of the resin toward the front of heating cylinder 101 impossible. In view of this, the cooling apparatus 103 cools the vicinity of the resin supply port of the heating cylinder 101 and the lower end portion of the resin supply hopper 104, whereby the resin pellets are fed in sufficient quantity toward the front of the heating cylinder 101.

The heating apparatus 105 is divided into a plurality of sections; e.g., three sections, with respect to the axial direction of the heating cylinder 101, wherein each section includes an electromagnetic induction coil. Notably, in order to protect the electromagnetic induction coil from heat of the heating cylinder 101, an unillustrated thermal insulating material is disposed between the heating apparatus 105 and the heating cylinder 101. The heating cylinder 101 is heated over substantially the entire length thereof by means of the heating apparatus 105.

GB-A-984,426 discloses a heating and cooling arrangement on the working cylinder of a mixing machine which comprises a cylindrical sleeve of nonmagnetic material surrounding the working cylinder with clearance to provide a cooling channel, a central entry duct for delivering cooling fluid into the cooling channel to be discharged through outlet ports at opposite ends of the sleeve, and a pair of preformed primary induction coils, each totally enclosed in axially spaced casings, which are preferably of magnetic material such as mild steel, mounted upon sleeve. The cooling medium may be air or a forced water spray.

JP-A-09 011301 was used as a basis for the preamble of claim 1 and discloses an injection machine. Referring to a heating cylinder equipped with band heaters on the outer surface, a measuring zone, a compression zone, and a supply zone are formed in sequence from the front injection nozzle side to the rear synthetic resin supply means installation side. A cooling jacket in which cooling water can be passed is formed only on the side of a synthetic resin material supply means installation on the outer surface of the supply zone formation place of the heating cylinder, and a temperature detection means for detecting the temperature of the supply zone in a state in which at least one band heater is put between it and the cooling jacket.

### DISCLOSURE OF THE INVENTION

### PROBLEMS TO BE SOLVED BY THE INVENTION

However, in the conventional injection apparatus, proper adjustment of the temperature of the heating cylinder 101 is difficult, so that a long time is needed for setup at the time of exchange of resin, and resin burn occurs. When so-called resin exchange (exchange of the presently used resin (molding material) with a resin of another type) is performed in the injection apparatus, the temperature of the heating cylinder 101 must be lowered in advance if the presently used resin is exchanged with a resin having a lower melting temperature. However, since the thermal insulating material is disposed between the heating apparatus 105 and the heating cylinder 101; i.e., the heating cylinder 101 is covered with the thermal insulating material, heat radiation is hindered, and a long time is required to lower the temperature of the heating cylinder 101. Therefore, an operator must wait for a long period of time before replacement with the resin having a lower melting temperature, so that a long time is needed for setup at the time of resin exchange.

Moreover, even in a molding step, the molten resin may temporarily stagnate within the heating cylinder 101 if the molding is temporarily interrupted. In such a case, the molten resin degrades because of heat, and so-called resin burn may occur. Therefore, when the molding is temporarily interrupted, the temperature of the heating cylinder 101 must be lowered quickly. However, since the thermal insulating material is disposed between the heating apparatus 105 and the heating cylinder 101, the temperature of the heating cylinder 101 cannot be lowered quickly, and occurrence of resin burn cannot be prevented.

Since the induction-heating-type heating apparatus 105 can impart a large quantity of heat to the heating cylinder 101, the heating apparatus 105 can quickly heat the heating cylinder 101 to a predetermined temperature. However, in a steady molding step after the heating cylinder 101 has been heated to the predetermined temperature, a large quantity of heat is not required to be supplied to the heating cylinder 101. FIG. 2(b) shows a temperature distribution of the heating cylinder of the injection apparatus shown in FIG. 2(a) in the case where the outputs of the respective heating apparatuses 105 are made equal to one another. As can be seen from FIG. 2(b), the temperature of the heating cylinder 101 hardly lowers at a portion remote from the cooling apparatus 103. Therefore, at the portion remote from the cooling apparatus 103, it is not necessary to apply a large quantity of heat to the heating cylinder 101 by the induction-heating-type heating apparatus 105.

Moreover, when the plurality of induction-heating-type heating apparatuses 105 are attached to be close to one another, magnetic interference occurs, and a power supply apparatus for supplying current to the electromagnetic induction coil is broken. Therefore, the heating apparatuses 105 must be attached to the heating cylinder 101 in such a manner that the heating apparatuses 105 are separated from one another by a certain distance. However, in this case, the temperature of the heating cylinder 101 drops between the heating apparatuses 105 as shown in FIG. 2(b).

An object of the present invention is to solve the above-mentioned problems in the conventional injection apparatus and to provide an injection apparatus and a heating method for an injection apparatus which can uniformly control the temperature of a heating cylinder to a proper value, and which can quickly change the temperature of the heating cylinder.

### MEANS FOR SOLVING THE PROBLEMS

In order to achieve the above object, the present invention provides an injection apparatus which intermittently feeds forward a resin within a heating cylinder by a screw in accordance with an injection molding cycle, as set forth in claim 1.

The present invention also provides a heating method for an injection apparatus which intermittently feeds forward a resin within a heating cylinder by a screw in accordance with an injection molding cycle, as set forth in claim 6. Preferred embodiments of the present invention may be gathered from the dependent claims.

### EFFECTS OF THE PRESENT INVENTION

With the injection apparatus of the present invention, the temperature of the heating cylinder can be uniformly controlled to a proper value, and the temperature of the heating cylinder can be changed quickly.

### BRIEF DESCRIPTION OF THE DRAWINGS

FIG. 1 is a sectional view showing the structure of a main portion of an injection apparatus according to a first embodiment of the present invention, with a screw advanced.
FIG. 2 is a view showing a conventional injection apparatus.
FIG. 3 is a schematic sectional view showing the structure of the injection apparatus according to the first embodiment of the present invention.
FIG. 4 is a diagram showing the configuration of a controller of the injection apparatus according to the first embodiment of the present invention.
FIG. 5 is a sectional view showing the structure of the main portion of the injection apparatus according to the first embodiment of the present invention, with the screw retreated.
FIG. 6 is a schematic sectional view showing the structure of an injection apparatus according to a second embodiment of the present invention.

### BEST MODE FOR CARRYING OUT THE INVENTION

Embodiments of the present invention will next be described in detail with reference to the drawings. Although the injection apparatus of the present invention can be applied to a molding machine of any type, a case where the present invention is applied to an injection molding machine will be described herein.

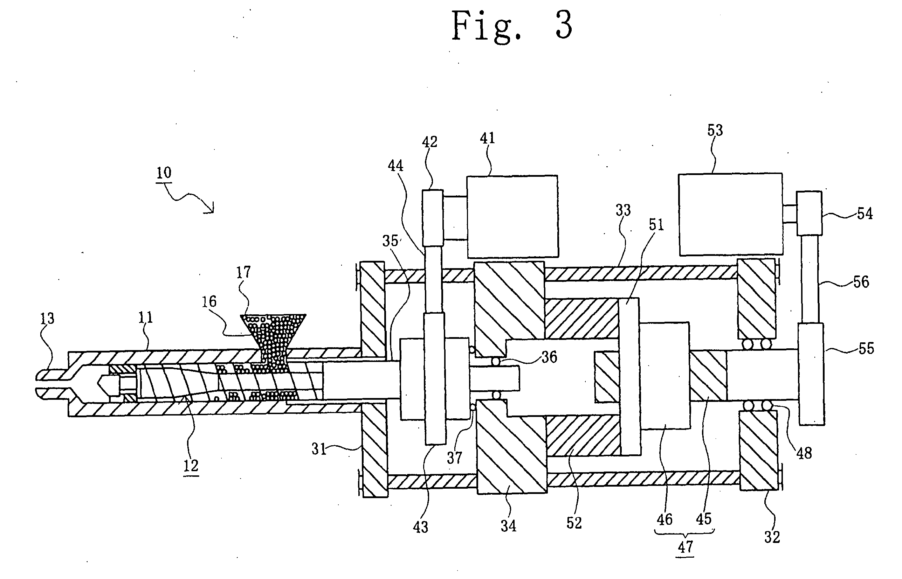

FIG. 3 is a schematic sectional view showing the structure of an injection apparatus according to a first embodiment of the present invention.

In FIG. 3, reference numeral 10 denotes an injection apparatus according to the present embodiment, which is used in an injection molding machine, which is a molding machine of one type. The injection molding machine includes an unillustrated mold clamping apparatus, and moves a movable mold in relation to a stationary mold, to thereby perform mold closing, mold clamping, and mold opening. The mold clamping apparatus, which may be of any type, includes a stationary platen fixed to an unillustrated frame, and a movable platen disposed in opposition to the stationary platen such that it can advance and retreat along unillustrated tie bars. Through advancing and retreating the movable platen, a movable mold attached to the movable platen is moved in relation to a stationary mold attached to the stationary platen so as to perform mold closing, mold clamping, and mold opening.

A toggle support is disposed on the frame to be located rear of the movable platen; i.e., on the side opposite the stationary platen. A toggle drive apparatus attached to the toggle support drives a toggle mechanism so as to advance and retreat the movable platen. The above-mentioned tie bars are disposed to extend between the stationary platen and the toggle support. In general, the toggle drive apparatus includes a mold open/close motor (drive source) 67, which will be described later; and an unillustrated motion direction conversion apparatus which is composed of a ball-screw mechanism or the like and which converts rotational motion of the mold open/close motor 67 to reciprocal motion so as to advance and retreat a drive shaft to thereby activate the toggle mechanism.

Moreover, in general, an ejector apparatus is attached to the movable platen. After completion of mold opening, the ejector apparatus causes an ejector pin to project from the cavity wall of the movable mold so as to eject a molded product adhering to the cavity wall. The ejector apparatus includes an ejector motor (drive source) 66, which will be described later; and an unillustrated motion direction conversion apparatus which is composed of a ball-screw mechanism or the like and which converts rotational motion of the ejector motor 66 to reciprocal motion so as to advance and retreat the ejector pin.

On the rear side of the stationary platen; i.e., on the side opposite the movable platen, the injection apparatus 10 is movably attached to the frame. Notably, the injection apparatus 10 is advanced and retreated in relation to the stationary platen by means of an unillustrated injection-apparatus moving mechanism, and can be advanced (moved leftward in FIG. 3) for nozzle touching. The injection apparatus 10 includes a heating cylinder 11 which has an injection nozzle 13 at the front end (left end in FIG. 3) thereof. Notably, the injection apparatus 10 is configured to intermittently feed forward resin within the heating cylinder 11 by means of a screw 12 in accordance with an injection molding cycle. A resin supply hopper 16 is attached to the heating cylinder 11 in order to supply to the interior of the heating cylinder 11 a material resin 17 in the form of grains, pellets, powder, or the like. The screw 12 is disposed within the heating cylinder 11 such that the screw 12 can rotate and can advance and retreat; i.e., can move forward and backward.

The rear end (right end in FIG. 3) of the heating cylinder 11 is attached to a front injection support 31 of the injection apparatus, which rotates the screw 12 within the heating cylinder 11, and advances and retreats the screw 12 (moves the screw 12 leftward and rightward in FIG. 3) within the heating cylinder 11. Moreover, the injection apparatus includes a rear injection support 32 separated from the front injection support 31 by a predetermined distance. Guide bars 33 are disposed to extend between the front and rear injection supports 31 and 32. A pressure plate 34 is supported by the guide bards 33 such that the pressure plate 34 can advance and retreat along the guide bars 33. Notably, the front and rear injection supports 31 and 32 are slidably attached to the frame via an unillustrated slide apparatus.

A drive shaft 35 is coupled with the rear end of the screw 12, and rotatably supported by bearings 36 and 37 to be rotatable in relation to the pusher plate 34. In order to rotate the screw 12, an electric metering motor 41, which serves as a first drive means, is disposed; and a first rotation transmission means, composed of pulleys 42 and 43 and a timing belt 44, is disposed between the metering motor 41 and the drive shaft 35. Accordingly, the screw 12 can be rotated in the regular or reverse direction through drive of the metering motor 41. In the present embodiment, the electric metering motor 41 is used as the first drive means; however, a hydraulic motor may be used in place of the electric metering motor 41.

A ball screw 47, composed of a ball screw shaft 45 and a ball nut 46 in mutual screw engagement, is disposed on the rear side (right-hand side in FIG. 3) of the pressure plate 34. The ball screw 47 constitutes a motion direction conversion apparatus which converts rotational motion to reciprocal motion. The ball screw shaft 45 is supported by a bearing 48 to be rotatable in relation to the rear injection support 32. The ball nut 46 is secured to the pressure plate 34 via a plate 51 and a load cell 52. In order to advance and retreat the screw 12, an injection motor 53, which serves as a second drive means, is disposed; and a second rotation transmission means, composed of pulleys 54 and 55 and a timing belt 56, is disposed between the injection motor 53 and the ball screw shaft 45. Accordingly, when the ball screw shaft 45 is rotated through drive of the injection motor 53, the ball nut 46 and the pressure plate 34 are moved, whereby the screw 12 can be advanced or retreated. In the present embodiment, the injection motor 53 is used as the second drive means; however, an injection cylinder may be used in place of the injection motor 53.

Next, the structure of a main portion of the injection apparatus 10 will be described in detail.

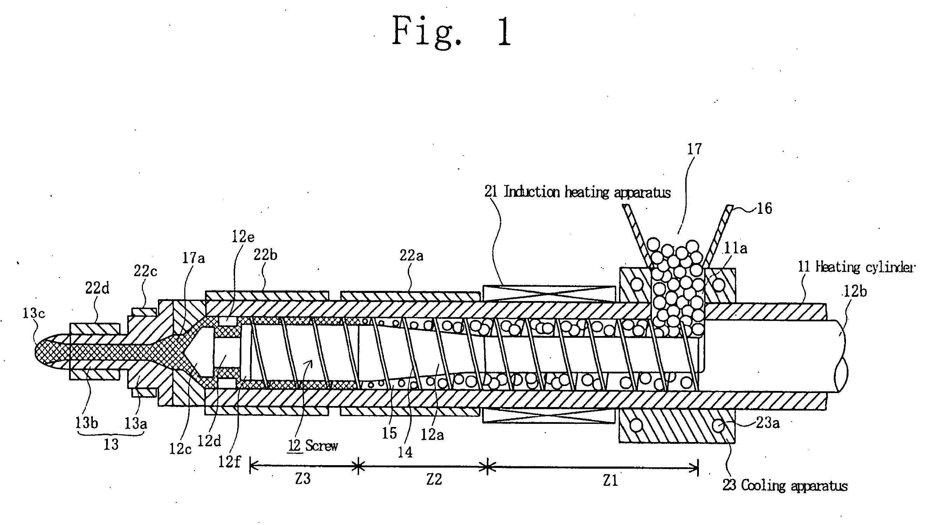

FIG. 1 is a sectional view showing the structure of the main portion of the injection apparatus according to the first embodiment of the present invention, with the screw advanced.

As shown in FIG. 1, the screw 12 includes a main body portion 12a, and a larger-diameter portion 12b connected to the rear end of the main body portion 12a. The above-described drive shaft 35 is connected to the rear end of the larger-diameter portion 12b. The main body portion 12a includes a flight 14 spirally formed on the outer circumference thereof, and a spiral grove 15 is formed by the flight 14. A screw head 12c is provided on the front side (on the left side in FIG. 1) of the main body portion 12a, and is connected to the main body portion 12a via a smaller-diameter connection portion 12d. The heating cylinder 11 has a resin supply port (molding material supply port) 11a, which is an opening formed in a rear portion of the heating cylinder 11. The lower end of the resin supply hopper 16 is connected to the resin supply port 11a, whereby the material resin 17 is supplied from the resin supply hopper 16 to the interior of the heating cylinder 11 via the resin supply port 11a.

At a rear portion of the heating cylinder 11; i.e., a portion in the vicinity of the resin supply port 11a, a cooling apparatus 23 is attached to the outer circumference of the heating cylinder 11. The cooling apparatus 23 is a water jacket having a flow passage 23a formed therein, and a cooling medium such as cooling water flows through the flow passage 23a. The cooling apparatus 23 cools the vicinity of the resin supply port 11a of the heating cylinder 11 and a lower end portion of the resin supply hopper 16. By virtue of this structure, the temperature of the material resin 17, which is supplied from the resin supply hopper 16 to the interior of the heating cylinder 11 via the resin supply port 11a, does not increase excessively. Therefore, the surfaces, etc. of the resin 17 in the solid state in the resin supply port 11a or the resin supply hopper 16 are prevented from being melted, which would otherwise result in formation of aggregates, and/or adhering to the inner surface of the resin supply hopper 16, the inner circumferential surface of the heating cylinder 11, the surface of the screw 12, etc.

An induction heating apparatus 21, serving as a first heating apparatus, and a resistance heating apparatus 22, serving as a second heating apparatus, are attached to the outer circumference of the heating cylinder 11. The resistance heating apparatus 22 is composed of a first band heater 22a, a second band heater 22b, a third band heater 22c, and a fourth band heater 22d, which are arranged along the axial direction of the heating cylinder 11. Specifically, whereas the first band heater 22a and the second band heater 22b are attached to the heating cylinder 11, the third band heater 22c and the fourth band heater 22d are attached to a larger-diameter portion 13a and a smaller-diameter portion 13b, respectively, of the injection nozzle 13 at the front end of the heating cylinder 11. The resistance heating apparatus 22 may be a single heating section or may be divided into any number of heating sections, and may be attached to any portion. For example, the third band heater 22c and the fourth band heater 22d may be integrated into a single heater, or the third band heater 22c or the fourth band heater 22d may be omitted. Notably, when the first through fourth band heaters 22a to 22d are described collectively, they are referred to as the "resistance heating apparatus 22."

The induction heating apparatus 21 is attached to a portion of the heating cylinder 11, the portion being located frontward of the cooling apparatus 23 and adjacent to the cooling apparatus 23. Notably, the cooling apparatus 23 is disposed to be close to the induction heating apparatus 21. The induction heating apparatus 21 includes an electromagnetic induction coil. Through supply of high-frequency current to the electromagnetic induction coil, induction current is generated within the heating cylinder 11 and the heating cylinder 11 is heated by the induction current. In order to protect the electromagnetic induction coil from heat of the heating cylinder 11, an unillustrated thermal insulating material is interposed between the induction heating apparatus 21 and the heating cylinder 11. Notably, the induction heating apparatus 21 itself may have a thermal insulating material at portions which come into contact with the outer circumference of the heating cylinder 11. Meanwhile, the resistance heating apparatus 22 includes a resistance heating line, or lead, which assumes a wire-like shape or a planar shape. Through supply of current to the lead, the lead generates heat to thereby heat the heating cylinder 11. In this manner, the heating cylinder 11 can be heated to a predetermined temperature through supply of electricity to the induction heating apparatus 21 and the resistance heating apparatus 22.

The induction heating apparatus 21 may be divided into a plurality of sections along the axial direction of the heating cylinder 11. When the induction heating apparatus 21, which is divided into a plurality of sections, is used, a conductor serving as a protective member may be provided between the sections of the induction heating apparatus 21, whereby the sections can be attached to be close to one another. In this case, the conductor is attached to the outer circumference of the thermal insulating material, and assumes the form of a split flange which enables maintenance to be performed in a state where the induction heating apparatus 21 is attached to the heating cylinder 11. Since the protective member is provided between the sections of the induction heating apparatus 21, each including an electromagnetic induction coil, the protective member can function as a magnetic shield. Accordingly, even when the sections of the induction heating apparatus 21 are attached to be close to one another, magnetic interference does not occur.

FIG. 1 shows a state in which the screw 12 is located at the most advanced position. A feed zone (supply portion) Z1, to which the material resin 17 is supplied from the resin supply port 11a, a compression zone (compression portion) Z2, in which the supplied material resin 17 is melted while being compressed, and a metering zone (metering portion) Z3, in which a certain amount of the melted resin or molten resin 17a is metered, are sequentially formed on the main body portion 12a of the screw 12, from a position adjacent to the larger-diameter portion 12b toward the front. The outer diameter of the bottom of the groove 15; i.e., the main body portion 12a, is set to be relatively small in the feed zone Z1, to gradually increase in the compression zone Z2 from the rear to the front, and to be relatively large in the metering zone Z3. Accordingly, the clearance between the inner circumferential surface of the heating cylinder 11 and the outer circumferential surface of the main body portion 12a is relatively large in the feed zone Z1, gradually decreases in the compression zone Z2 from the rear to the front, and is relatively small in the metering zone Z3.

When the screw 12 is rotated in the regular direction in a metering step, the material resin 17 within the hopper 16 is supplied to the feed zone Z1 via the resin supply port 11a, and is caused to advance (move leftward in FIG. 1) within the groove 15. With this, the screw 12 is caused to retreat (move rightward in FIG. 1), whereby the molten resin 17a is accumulated forward of the screw head 12c. Notably, the resin within the groove 15 assumes a solid form such as grains, pellets, or powder, in the feed zone Z1, is half melted in the compression zone Z2, and is completely melted and becomes the molten resin 17a in the metering zone Z3.

If the outer circumferential surface of the main body portion 12a and the inner circumferential surface of the heating cylinder 11 are of the same roughness, even when the screw 12 is rotated in a metering step, the material resin 17 within the groove 15 is rotated together with the screw 12, and does not advance. Therefore, in general, the inner circumferential surface of the heating cylinder 11 is processed to be rougher than the outer circumferential surface of the main body portion 12a. When the screw 12 is advanced in an injection step, the molten resin 17a accumulated forward of the screw head 12c is injected from a nozzle hole 13c of the injection nozzle 13. At this time, the molten resin 17a accumulated forward of the screw head 12c may flow in the reverse direction. In order to present such reverse flow of the resin, a reverse-flow prevention device composed of a reverse-flow prevention ring 12e and a seal ring 12f is disposed around the connection portion 12d.

Next, the configuration of a controller of the injection apparatus 10 will be described in detail.

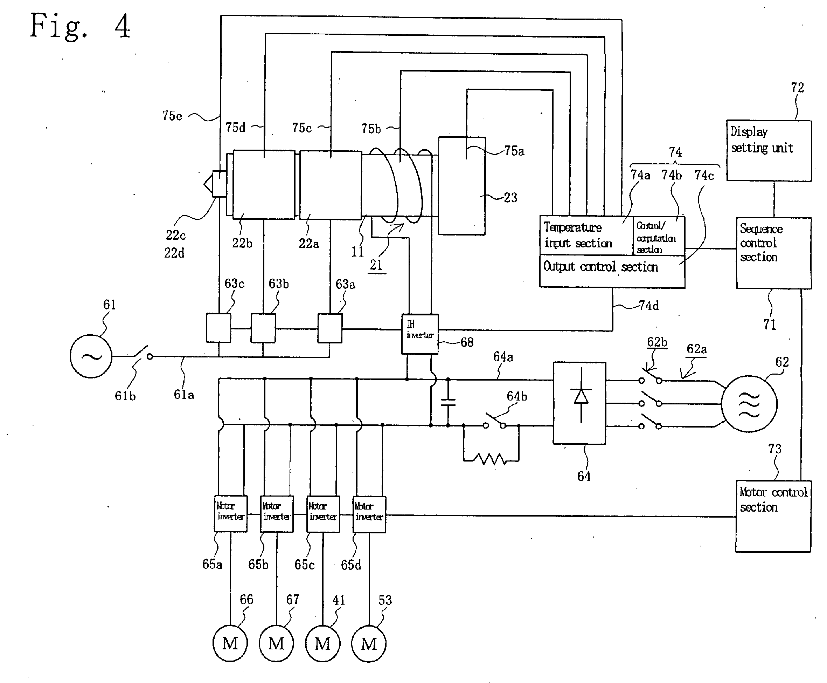

FIG. 4 is a diagram showing the configuration of the controller of the injection apparatus according to the first embodiment of the present invention.

In FIG. 4, reference numeral 61 denotes a single-phase AC power source for supplying current to the resistance heating apparatus 22. The AC power source 61 supplies current to the first band heater 22a, the second band heater 22b, the third band heater 22c, and the fourth band heater 22d via a power supply line 61a. Notably, a main switch 61b is interposed in the power supply line 61a. A first on-off switch 63a for controlling current supplied to the first band heater 22a, a second on-off switch 63b for controlling current supplied to the second band heater 22b, and a third on-off switch 63c for controlling current supplied to the third and fourth band heaters 22c and 22d are disposed in corresponding branch lines branched from the power supply line 61a. In the example shown in FIG. 4, the third and fourth band heaters 22c and 22d are formed integrally. However, the third and fourth band heaters 22c and 22d may be formed individually. In this case, currents supplied to these heaters may be individually controlled through provision of independent on-off switches. The first on-off switch 63a, the second on-off switch 63b, and the third on-off switch 63c are semiconductor switches formed of, for example, thyristors, and their operations are individually controlled by a heating control section 74 to be described later.

Reference numeral 62 denotes a three-phase AC power source for supplying current to various motors, etc., via a three-phase power supply line 62a. The current is converted to direct current by means of a converter 64, and the direct current is supplied via a power supply line 64a to a first motor inverter 65a, a second motor inverter 65b, a third motor inverter 65c, and a fourth motor inverter 65d. Notably, switches 62b and 64b are interposed in the three-phase power supply line 62a and the power supply line 64a, respectively. The first motor inverter 65a controls current supplied to the ejector motor 66; the second motor inverter 65b controls current supplied to the mold open/close motor 67; the third motor inverter 65c controls current supplied to the metering motor 41; and the fourth motor inverter 65d controls current supplied to the injection motor 53. In the present embodiment, each of the ejector motor 66, the mold open/close motor 67, the metering motor 41, and the injection motor 53 is a servomotor. Notably, each of the first through fourth motor inverters 65a to 65d is an inverter which converts direct current to alternating current of an arbitrary frequency; and their operations are individually controlled by a motor control section 73 to be described later.

The direct current from the converter 64 is controlled by means of an IH inverter 68, and is supplied to the electromagnetic induction coil of the induction heating apparatus 21. The operation of the IH inverter 68 is controlled by the heating control section 74.

Reference numeral 71 denotes a sequence control section which controls the entire operation of the injection apparatus 10. Reference numeral 72 denotes a display setting unit which is connected to the sequence control section 71 and which includes display devices such as various meters, lamps, a CRT, a liquid crystal display, and an LED (light emitting diode) display, and input devices such as various buttons, a keyboard, a joystick, a mouse, and a touch panel. An operator of the injection apparatus 10 operates the input devices, while viewing the displays of the display devices, so as to perform various settings. The motor control section 73 and the heating control section 74 are connected to the sequence control section 71. The motor control section 73 controls the first through fourth motor inverters 65a to 65d in accordance with instructions from the sequence control section 71 to thereby control the operations of the ejector motor 66, the mold open/close motor 67, the metering motor 41, and the injection motor 53.

The heating control section 74 includes a temperature input section 74a, a control/computation section 74b, and an output control section 74c. The heating control section 74 controls the operations of the first on-off switch 63a, the second on-off switch 63b, the third on-off switch 63c, and the IH inverter 68 in accordance with instructions from the sequence control section 71 to thereby control the operations of the first through fourth band heaters 22a to 22d, as well as the operation of the induction heating apparatus 21.

A first temperature detector 75a is provided on a portion of the heating cylinder 11 where the cooling apparatus 23 is attached. A second temperature detector 75b is provided on a portion of the heating cylinder 11 where the induction heating apparatus 21 is attached. A third temperature detector 75c is provided on a portion of the heating cylinder 11 where the first band heater 22a is attached. A fourth temperature detector 75d is provided on a portion of the heating cylinder 11 where the second band heater 22b is attached. A fifth temperature detector 75e is provided on a portion of the heating cylinder 11 where the third and fourth band heaters 22c and 22d are attached. The first through fifth temperature detectors 75a to 75e, each of which is a temperature sensor such as a thermistor or a thermocouple, detect the temperature of the heating cylinder 11, and input the detected temperature to the temperature input section 74a. On the basis of differences between the temperatures detected at the respective portions of the heating cylinder 11 and input to the temperature input section 74a and target temperatures for the respective portions of the heating cylinder 11 received from the sequence control section 71, the control/computation section 74b calculates control values for rendering the temperatures at the respective portions of the heating cylinder 11 coincident with the corresponding target temperatures. On the basis of the control values calculated by the control/computation section 74b, the output control section 74c controls the operations of the first on-off switch 63a, the second on-off switch 63b, the third on-off switch 63c, and the IH inverter 68, to thereby control the quantities of heat generated by the first through fourth band heaters 22a to 22d and the induction heating apparatus 21, such that the temperatures at the respective portions of the heating cylinder 11 coincide with the corresponding target temperatures.

Notably, each of the sequence control section 71, the motor control section 73, and the heating control section 74 is a computer which includes computation means such as a CPU or MPU, storage means such as a magnetic disc, semiconductor memory, etc., and an input/output interface. The sequence control section 71, the motor control section 73, and the heating control section 74 may be configured independently of one another or may be portions of an single, integrally-formed controller. Alternatively, these sections may be integrated with another controller. For example, each of these sections may be one of a plurality of control systems created within a large-scale computer.

Next, operation of the injection apparatus 10 having the above-described structure will be described.

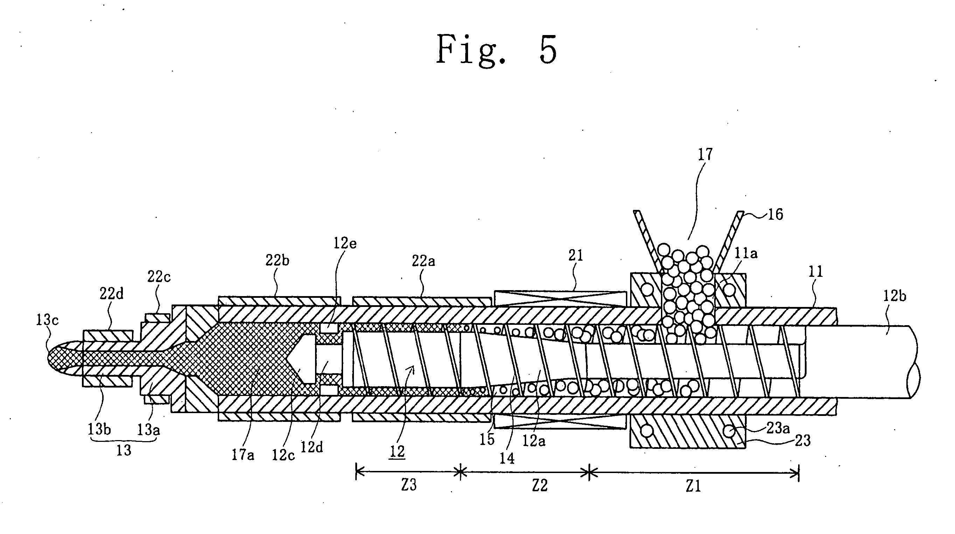

FIG. 5 is a sectional view showing the structure of the main portion of the injection apparatus according to the first embodiment of the present invention, with the screw retreated.

In a metering step, the metering motor 41 rotates, and the pulley 42 rotates. Rotation of the pulley 42 is transmitted to the drive shaft 35 via the timing belt 44 and the pulley 43. As a result, the screw 12 connected to the drive shaft 35 rotates in the regular direction. With rotation of the screw 12 in the regular direction, the material resin 17 within the resin supply hopper 16 is supplied to the feed zone Z1 via the resin supply port 11a and is caused to advance within the groove 15. The material resin 17, advancing within the groove 15, receives heat from the heating cylinder 11 heated to a predetermined temperature, and receives shearing energy, so that the material resin 17 is heated and melted. The material resin 17 is half-melted in the compression zone Z2, and is completely melted and becomes the molten resin 17a in the metering zone Z3. Since the molten resin 17a is accumulated forward of the screw head 12c, due to the pressure of the accumulated molten resin 17a, the screw 12 is retreated to the position shown in FIG. 5.

Subsequently, in an injection step, the injection nozzle 13 at the front end of the heating cylinder 11 is inserted into the nozzle insertion hole of the unillustrated stationary platen, and pressed against the stationary mold for nozzle touching. The injection motor 53 then rotates, and the pulley 54 rotates. Rotation of the pulley 54 is transmitted to the ball screw shaft 45 via the timing belt 56 and the pulley 55. With rotation of the ball screw shaft 45, the ball nut 46 and the pressure plate 34 advance, whereby the screw 12 is advanced. Notably, before start of the injection step, the toggle mechanism is operated through rotation of the mold open/close motor 67, and thus, the movable platen and the movable mold are advanced to perform mold closing, whereby the mold surface of the movable mold comes into contact with the mold surface of the stationary mold. Therefore, a cavity space having a shape corresponding to an article to be molded is formed by the cavity of the stationary mold and the cavity of the movable mold. When the screw 12 is advanced in this state, the molten resin 17a accumulated on the front side of the screw 12c is injected from the nozzle hole 13c of the injection nozzle 13, and is charged into the cavity space via a sprue formed in the stationary mold.

After performance of mold clamping, the resin within the cavity is cooled to a certain degree and solidified, whereby an article is molded. Subsequently, the mold open/close motor 67 rotates in the reverse direction to operate the toggle mechanism so as to retreat the movable platen and the movable mold, whereby mold opening is performed. Subsequently, the ejector motor 66 rotates so as to cause the ejector pin to eject from the cavity of the movable mold, whereby the molded article adhering to the cavity surface is ejected and separated from the mold. The mold apparatus may include a single cavity or a plurality of cavities. In the case where the mold apparatus includes a plurality of cavities, a plurality of articles can be molded through a single-shot molding process.

When the single-shot molding process is completed in this manner, the above-described operation is repeated, whereby the molding process is successively performed a predetermined number of times, whereby a predetermined number of articles can be molded.

The temperature conditions of the heating cylinder 11 and the injection nozzle 13, from the resin supply port 11a to the nozzle hole 13c, greatly affect the moldability of the resin, etc. For example, when the temperature of the heating cylinder 11 is excessively low, the molten resin 17a contains incompletely melted resin; and when the temperature of the heating cylinder 11 is excessively high, the molten resin 17a thermally decomposes or generates gas. Further, the proper temperatures of the heating cylinder 11 and the injection nozzle 13 change depending on the type of resin, the shape of articles to be molded, the molding cycle (molding speed), and the like. Therefore, in the present embodiment, the first through fifth temperature detectors 75a to 75e detect temperatures of the heating cylinder 11, and the heating control section 74 controls the quantities of heat generated by the first through fourth band heaters 22a to 22d and the induction heating apparatus 21 on the basis of the differences between the detected temperatures of the heating cylinder 11 and the target temperatures of the heating cylinder 11 received from the sequence control section 71. By virtue of this control, the temperatures of the heating cylinder 11 can be controlled to proper values.

Moreover, the temperature conditions required at the respective portions of the heating cylinder 11 change. That is, generally the entire portion of the heating cylinder 11 must be maintained at a relatively high temperature so as to sufficiently heat the material resin 17. In contrast, the portion in the vicinity of the resin supply port 11a of the heating cylinder 11 must be maintained at a relatively low temperature so as to prevent melting of the surfaces, etc. of the material resin 17 in the solid form within the resin supply port 11a and the resin supply hopper 16, to thereby prevent formation of aggregates or adhesion to the inner surface of the resin supply hopper 16, the inner circumferential surface of the heating cylinder 11, the surface of the screw 12, etc. However, since the remaining portions of the heating cylinder 11 are of high temperature, heat is transferred to the portion in the vicinity of the resin supply port 11a from the remaining portions, so that the temperature of the portion in the vicinity of the resin supply port 11a increases. In view of this, at the portion in the vicinity of the resin supply port 11a of the heating cylinder 11, the cooling apparatus 23 is attached to the outer circumference of the heating cylinder 11 so as to cool the vicinity of the resin supply port 11a of the heating cylinder 11 and the lower end portion of the resin supply hopper 16.

However, since a portion of the heating cylinder 11 located forward of the cooling apparatus 23 is also cooled by the cooling apparatus 23, the temperature of that portion lowers. In particular, since the cooling apparatus 23 takes a large quantity of heat out of a portion of the heating cylinder 11 located forward of the cooling apparatus 23 and adjacent thereto, the temperature greatly lowers at that portion. However, as shown in FIG. 1, the above-mentioned portion corresponds to the feed zone Z1 of the screw 12 and is close to the compression zone Z2 thereof. Therefore, the material resin 17 must be sufficiently heated at the above-mentioned portion.

In view of the above, in the present embodiment, the induction heating apparatus 21 is attached to the outer circumference of a portion of the heating cylinder 11, the portion being located forward of the cooling apparatus 23 and adjacent thereto. The induction heating apparatus 21 generates induction current within the heating cylinder 11 through supply of high-frequency current to the electromagnetic induction coil contained therein, to thereby heat the heating cylinder 11. Therefore, theoretically, a large quantity of heat can be applied to the heating cylinder 11. The induction heating apparatus 21 is attached to be very close to the cooling apparatus 23. Therefore, the induction heating apparatus 21 can maintain at a predetermined temperature the portion located forward of the cooling apparatus 23 and adjacent thereto.

Moreover, the first through fourth band heaters 22a to 22d, which constitute the resistance heating apparatus 22, are attached to the portion other than the portion located forward of the cooling apparatus 23 and adjacent thereto; i.e., a portion remote from the cooling apparatus 23. Since the cooling apparatus 23 does not take a large quantity of heat from a portion remote from the cooling apparatus 23, the temperature does not decrease. Therefore, even the resistance heating apparatus 22, which cannot apply a large quantity of heat to the heating cylinder 11 within a short period of time as compared with the induction heating apparatus 21, can maintain the portion remote from the cooling apparatus 23 at a predetermined temperature.

Moreover, even when the plurality of sections (band heaters) of the resistance heating apparatus 22 are attached to be close to one another, magnetic interference does not occur, unlike the case of the induction heating apparatus 21. Further, even when the resistance heating apparatus 22 is attached to be close to the induction heating apparatus 21, magnetic interference does not occur. Therefore, the plurality of sections (band heaters) of the resistance heating apparatus 22 and the induction heating apparatus 21 can be attached in such a manner that they are located close to one another and no gap is formed therebetween with respect to the axial direction of the heating cylinder 11. Accordingly, the heating cylinder 11 can be heated while its temperature is properly controlled along the axial direction of the heating cylinder 11. With this operation, the temperature of the heating cylinder 11 can be properly controlled along the axial direction of the heating cylinder 11, so that no dip arises in the temperature of the heating cylinder 11 between the sections of the resistance heating apparatus 22 or between the resistance heating apparatus 22 and the induction heating apparatus 21.

Moreover, the temperature of the heating cylinder 11 must be lowered when the temperature of the heating cylinder 11 has exceeded a predetermined temperature, when the resin is exchanged with a resin having a lower melting point at the time of resin exchange, or when the molten resin 17a temporarily stagnates within the heating cylinder 11 because of temporary interruption of the molding process. In such a case, the only required action is to stop the supply of electricity to the resistance heating apparatus 22. Since the resistance heating apparatus 22 is high in heat radiation performance, the temperature of the portion remote from the cooling apparatus 23 lowers quickly. That is, the induction heating apparatus 21 is low in heat radiation performance, because in order to protect the electromagnetic induction coil from heat of the heating cylinder 11, the induction heating apparatus 21 must have a thermal insulating material and/or a thermal insulating material must be provided between the induction heating apparatus 21 and the heating cylinder 11. In contrast, the resistance heating apparatus 22 is high in heat radiation performance, because the resistance heating apparatus 22 is not required to have a thermal insulating material and no thermal insulating material is required to be provided between the resistance heating apparatus 22 and the heating cylinder 11. Notably, although the induction heating apparatus 21, which is low in heat radiation performance, is attached to the portion located forward of the cooling apparatus 23 and adjacent thereto, the temperature of that portion drops quickly, because the cooling apparatus 23 takes heat out of that portion.

As described above, in the compression zone Z2 and the metering zone Z3, which are remote from the cooling apparatus 23, the resistance heating apparatus 22, which is high in cooling speed, is used, so that the temperature can be lowered quickly. In particular, at a portion corresponding to the compression zone Z2, where shearing heat generation occurs when the screw rotates and the resin melts, use of the resistance heating apparatus 22 is desired. As a result, the temperatures of the compression zone Z2 and the metering zone Z3 can be lowered quickly.

Therefore, the temperature of the heating cylinder 11 can be properly controlled. Further, the working time for resin exchange can be shortened. In addition, even when the molten resin 17a temporarily stagnates within the heating cylinder 11, degrading or burning of the molten resin 17a can be prevented. Notably, the induction heating apparatus 21 is disposed at a portion corresponding to at least the feed zone Z1 of the screw 12, which is located forward of the cooling apparatus 23 in a state where the screw 12 is retreated as shown in FIG. 5. By virtue of this configuration, a large quantity of heat can be applied to the heating cylinder 11 at that portion, so that the material resin 17 supplied from the resin supply port 11a to the feed zone Z1 can be heated sufficiently.

The induction heating apparatus 21 desirably has a size to cover a portion corresponding to the feed zone Z1 of the screw 12, which is located forward of the cooling apparatus 23 in a state where the screw 12 is advanced as shown in FIG. 1. By virtue of this configuration, a large quantity of heat can be applied to the heating cylinder 11 at the entire portion corresponding to the feed zone Z1, so that the material resin 17 can be heated sufficiently in the entire feed zone Z1 of the screw 12 located forward of the cooling apparatus 23. When the screw 12 is moved from the retreated state (state after completion of metering) as shown in FIG. 5 to the advanced state (after completion of injection) as shown in FIG. 1, the material resin 17 is supplied to the feed zone Z1, and the supplied material resin 17 takes heat from the heating cylinder 11 in that area. However, since a large quantity of heat can be applied to the heating cylinder 11 by means of the induction heating apparatus 21, the material resin 17 in the feed zone Z1 can be heated sufficiently. Further, in the state where the screw 12 is retreated, since the distance between the resin supply port 11a and the compression zone Z2; i.e., the effective length of the feed zone Z1, decreases, a rear portion of the compression zone Z2 can be heated accordingly, so that material resin 17 can be heated sufficiently. In particular, even in the case where, as in the case of high-cycle molding, a single-shot molding time is short (for example, 10 sec or less) and a large quantity of the material resin 17 is supplied within a short period of time, the material resin 17 can be heated sufficiently, and the temperature of the material resin 17 does not drop. Therefore, high-cycle molding becomes possible, and the molding efficiency of the injection molding machine is improved.

Moreover, the induction heating apparatus 21 desirably has a size to cover at least a portion having a length corresponding to the stroke over which the screw 12 advances and retreats. In general, even during a period in which the screw 12 advances in an injection step, the material resin 17 is supplied from the resin supply port 11a to the feed zone Z1. Therefore, the temperature of the material resin 17 may drop in the portion having a length corresponding to the stroke. However, since the induction heating apparatus 21 covers the portion having a length corresponding to the stroke, the material resin 17 can be heated sufficiently. Therefore, even at the portion having a length corresponding to the stroke, the temperature of the material resin 17 does not drop. Accordingly, high-cycle molding becomes possible, and the molding efficiency of the injection molding machine is improved.

Moreover, the injection nozzle 13 attached to the front end of the heating cylinder 11 is equipped with the resistance heating apparatus 22, which is smaller in size than the induction heating apparatus 21. In this case, since the resin has already been melted at the injection nozzle 13 and the injection nozzle 13 is lower in heat capacity than the heating cylinder 11, use of the resistance heating apparatus 22 is desired. This eliminates the necessity of providing a large space around the injection nozzle 13 for providing a device for heating the injection nozzle 13. As a result, the nozzle insertion hole of the unillustrated stationary platen can be made smaller.

As described above, in the injection apparatus 10 according to the present embodiment, in which the screw 12 advances and retracts within the heating cylinder 11, the induction heating apparatus 21 is attached to the outer circumference of a portion of the heating cylinder 11, the portion being located forward of the cooling apparatus 23 and adjacent thereto. Therefore, the portion of the heating cylinder 11 located forward of the cooling apparatus 23 and adjacent thereto can be heated by means of the induction heating apparatus 21, which can apply a large quantity of heat to the heating cylinder 11, whereby that portion can be maintained at a predetermined temperature. Accordingly, the temperature of the heating cylinder 11 can be uniformly controlled to a proper value.

Moreover, even when the induction heating apparatus 21, which is low in heat radiation performance, is attached to the above-described portion, heat is removed from that portion by the cooling apparatus 23, whereby the temperature drops quickly. Therefore, the temperature of the heating cylinder 11 can be changed quickly.

Next, a second embodiment of the present invention will be described. Components having the same structures as those of the first embodiment will be denoted by the same reference numerals, and their descriptions will not be repeated. Further, descriptions of actions and effects identical to those of the first embodiment will not be repeated.

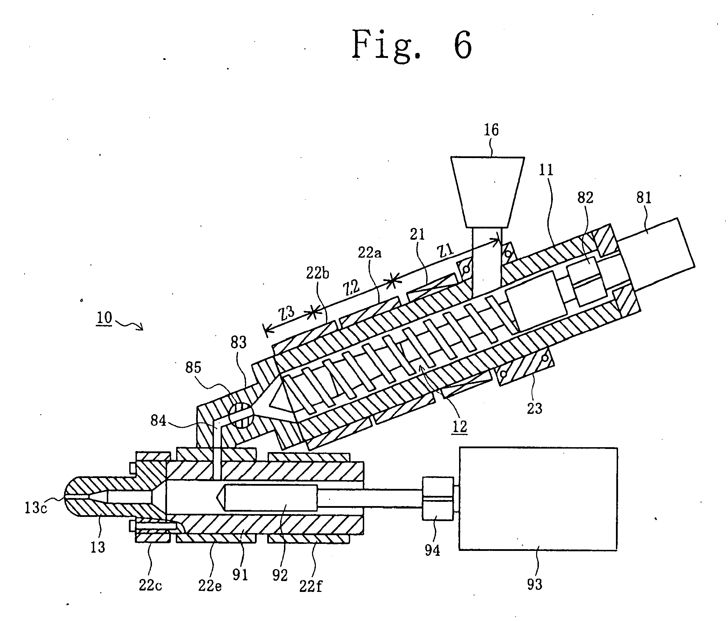

FIG. 6 is a schematic sectional view showing the structure of an injection apparatus according to the second embodiment of the present invention.

In the present embodiment, the injection apparatus 10 is a so-called preplasticating injection apparatus, and includes an injection cylinder 91; a plunger (injection member) 92 disposed in the injection cylinder 91 such that the plunger 92 can advance and retreat (can move leftward and rightward in FIG. 6); and a plunger drive apparatus (drive section for metering and injection) 93 for advancing and retreating the plunger 92. The injection apparatus 10 intermittently feeds forward resin within a heating cylinder 11 by means of a screw 12 in accordance with the molding cycle.

In this case, the heating cylinder 11 is connected to a predetermined portion of the injection cylinder 91 via a communication pipe 83 having a communication passage 84 formed therein, and obliquely extends upward from the connection position. The heating cylinder 11 supplies a molten resin 17a to the interior of the injection cylinder 91 via the communication passage 84. Notably, an induction heating apparatus 21 is attached to the outer circumference of a portion of the heating cylinder 11, the portion being located forward of a cooling apparatus 23 and corresponding to the feed zone Z1 of the screw 12.

A valve member (open-close valve) 85 is interposed in the communication passage 84 so as to control the supply of the molten resin 17a to the heating cylinder 11. The valve member 85 can be opened and closed through drive of an unillustrated actuator by the above-described controller so as to open or block the communication passage 84 between the heating cylinder 11 and the injection cylinder 91, or adjust the degree of opening, to thereby control the flow rate of the molten resin 17a passing through the communication passage 84. In the example shown in FIG. 6, a ball valve is used as the valve member 85. However, a needle valve, a slide mechanism, or the like can be used in place of the ball valve.

In the present embodiment, the screw 12 is prevented from advancing or retracting within the heating cylinder 11. That is, the screw 12 is disposed within the heating cylinder 11 such that the screw 12 can rotate but cannot advance or retreat. A screw drive motor (screw drive apparatus) 81 for rotating the screw 12 within the heating cylinder 11 is attached to the rear end (right-hand end in FIG. 6) of the heating cylinder 11. Operation of the screw drive motor 81 is controlled by the above-mentioned controller. Notably, the screw 12 is coupled with the output shaft of the screw drive motor 81 via a coupler 82.

An injection nozzle 13 is attached to the front end (left-hand end in FIG. 6) of the injection cylinder 91. In the example shown in FIG. 6, the above-mentioned fourth band heater 22d is omitted. However, as in the first embodiment, the fourth band heater 22d may be attached to the injection nozzle 13. In the present embodiment, the above-mentioned resistance heating apparatus 22 further includes a fifth band heater 22e and a sixth band heater 22f, which are attached to the outer circumference of the injection cylinder 91. Supply of electricity to the fifth band heater 22e and the sixth band heater 22f is controlled by the above-described controller. Through supply of electricity to the fifth band heater 22e and the sixth band heater 22f, the injection cylinder 91 can be heated to a predetermined temperature. Notably, the fifth band heater 22e and the sixth band heater 22f may be integrated into a single heater, or the fifth band heater 22e or the sixth band heater 22f may be omitted.

The rear end (right-hand end in FIG. 6) of the plunger 92 is connected via a coupler 94 to the output shaft of the plunger drive apparatus 93 disposed on the rear side (right-hand side in FIG. 6) of the injection cylinder 91. Operation of the plunger drive apparatus 93 is controlled by the above-described controller.

In the injection apparatus 10 of the present embodiment, before start of a metering step, the plunger 92 is placed at a metering start position, which is a rearward retracted position within the injection cylinder 91. Further, the controller drives the actuator such that a predetermined degree of opening is realized by the valve member 85, and the molten resin 17a flows through the communication passage 84 at a predetermined flow rate. When the metering step is started, the screw drive motor 81 operates to thereby rotate the screw 12 with the plunger 92 being located at the metering start position. As a result, the material resin 17 within the resin supply hopper 16 is supplied into the heating cylinder 11. The supplied material resin 17 advances within the groove 15 with rotation of the screw 12, so that the material resin 17 moves from a feed zone Z1 to a compression zone Z2, and then reaches a metering zone Z3. The material resin 17 is half-melted in the compression zone Z2, and is completely melted and becomes the molten resin 17a in the metering zone Z3. The molten resin 17a is supplied to the interior of the injection cylinder 91 via the communication passage 84, and is accumulated forward of the plunger 92.

During this operation, the material resin 17 tends to move forward within the heating cylinder 11 with rotation of the screw 12. However, the flow rate of the molten resin 17a at the communication passage 84 is restricted by means of the valve member 85, whereby the molten resin 17a is throttled. Thus, a back pressure corresponding to the degree of opening can be applied to the molten resin 17a within the heating cylinder 11, so that the density of the plasticized resin; i.e., the molten resin 17a, can be made uniform. As a result, the quality of molded articles can be improved.

After the molten resin 17a is sufficiently accumulated forward of the plunger 92 within the heating cylinder 11, the controller drives the actuator so as to close the valve member 85, to thereby shut off the communication passage 84, and stops the operation of the screw drive motor 81 to thereby stop the rotation of the screw 12.

Subsequently, in an injection step, the injection nozzle 13 at the front end of the heating cylinder 11 is inserted into the nozzle insertion hole of an unillustrated stationary platen, and pressed against a stationary mold for nozzle touching. The controller then operates the plunger drive apparatus 93 so as to advance the plunger 92 toward the advancement limit position. With this, the molten resin 17a accumulated on the front side of the plunger 92 within the heating cylinder 11 is injected from a nozzle hole 13c of the injection nozzle 13, and is charged into the cavity space via a sprue formed in the stationary mold.

When the plunger 92 reaches the advancement limit position, the controller stops the operation of the plunger drive apparatus 93 so as to stop the plunger 92, to thereby complete the injection step. Subsequently, the controller operates the plunger drive apparatus 93 so as to retreat the plunger 92 to the metering start position for the next shot.

As described above, in the preplasticating injection apparatus 10 according to the present embodiment, which includes the injection cylinder 91, and the plunger 92 advancing and retracting within the injection cylinder 91, the induction heating apparatus 21 is attached to the heating cylinder 11 at a portion located forward of the cooling apparatus 23 and corresponding to the feed zone Z1 of the screw 12. By virtue of this configuration, the portion of the heating cylinder 11 corresponding to the feed zone Z1 of the screw 12 can be heated by means of the induction heating apparatus 21, which can apply a large quantity of heat to the heating cylinder 11, whereby that portion can be maintained at a predetermined temperature. Accordingly, the temperature of the heating cylinder 11 can be uniformly controlled to a proper value.

In the present embodiments, the injection molding machine is of a horizontal type in which the movable platen moves in a lateral direction (horizontal direction). However, the injection apparatus and the heating method for an injection apparatus of the present invention can be applied to a vertical-type injection molding machine in which the movable platen moves in a vertical direction. Further, the injection apparatus and the heating method for an injection apparatus of the present invention can be applied not only to injection molding machines, but also to other forming machines such as die cast machines and IJ sealing presses.

The present invention is not limited to the above-described embodiments. Numerous modifications and variations of the present invention are possible
within the scope of the present invention as defined by the appended claims.

### INDUSTRIAL APPLICABILITY

The present invention can be applied to injection apparatuses and heating methods therefor.

## Claims

1. An injection apparatus (10) which intermittently feeds forward a resin (17, 17a) within a heating cylinder (11) by a screw (12) in accordance with an injection molding cycle, comprising:
a cooling apparatus (23) attached to a rear portion of the heating cylinder (11); and
a heating apparatus (21) attached to the heating cylinder (11) to be located forward of the cooling apparatus (23) and adjacent to the cooling apparatus (23),
**characterized in that** the heating apparatus (21) is an induction heating apparatus (21) which is attached between the cooling apparatus (23) and a resistance heating apparatus (22) attached to the heating cylinder (11).

2. An injection apparatus according to claim 1, wherein
the screw (12) is arranged to advance and retreat within the heating cylinder (11); and
the induction heating apparatus (21) is attached to a portion of the heating cylinder (11) corresponding to at least a feed zone (Z1) of the screw (12) which is located forward of the cooling apparatus (23) in a state where the screw (12) is retreated.

3. An injection apparatus according to claim 2, wherein the induction heating apparatus (21) is attached to a portion of the heating cylinder (11) corresponding to the feed zone (Z1) of the screw (12) which is located forward of the cooling apparatus (23) in a state where the screw (12) is advanced.

4. An injection apparatus according to claim 1, wherein the induction heating apparatus (21) is attached so as to cover at least a portion having a length corresponding to a stroke of advancement and retreat of the screw (12).

5. An injection apparatus according to claim 1, further comprising:
an injection cylinder (91) and a plunger (92) which advances and retreats within the injection cylinder (91),
wherein the screw (12) is adapted to rotate when the plunger (92) is located at a retreated position, and
the induction heating apparatus (21) is attached to a portion of the heating cylinder (11) located forward of the cooling apparatus (23) and
corresponding to a feed zone (Z1) of the screw (12).

6. A heating method for an injection apparatus (10) which intermittently feeds forward a resin (17, 17a) within a heating cylinder(11) by a screw (12) in accordance with an injection molding cycle, the method comprising the steps of:
heating a feed zone (Z1) of the screw (12) by means of an induction heating apparatus (21) attached to the heating cylinder (11) having a cooling apparatus (23) attached to a rear portion thereof, the induction heating apparatus (21) being located forward of the cooling apparatus (23) and adjacent to the cooling apparatus (23), wherein the induction heating apparatus (21) is attached between the cooling apparatus (23) and a resistance heating apparatus (22) attached to the heating cylinder (11).

7. A heating method for an injection apparatus according to claim 6, wherein the screw (12) advances and retreats within the heating cylinder (11).

8. A heating method for an injection apparatus according to claim 6, wherein the screw (12) includes an injection cylinder (91) and a plunger(92) which advances and retreats within the injection cylinder (92); and the screw (12) rotates when the plunger (92) retreats.

9. A heating method for an injection apparatus according to claim 6, wherein said heating step comprises:
heating a portion having a length corresponding to at least a stroke of advancement and retreat of the screw (12), by means of said induction heating apparatus (21).

## Patentansprüche

1. Einspritzvorrichtung (10), die periodisch bzw. in Abständen ein Harz (17, 17a) innerhalb eines Erwärmungszylinders (11) durch eine Schraube bzw. Schnecke (12) gemäß einem Einspritzzyklus vorwärts führt, die Folgendes aufweist:
eine Kühlvorrichtung (23), die an einem hinteren Teil des Erwärmungszylinders (11) angebracht ist; und
eine Erwärmungsvorrichtung (21), die an dem Erwärmungszylinder (11) angebracht ist, um vor der Kühlvorrichtung (23) und benachbart zu der Kühlvorrichtung (23) angeordnet zu sein,
**dadurch gekennzeichnet, dass** die Erwärmungsvorrichtung (21) eine Induktionserwärmungsvorrichtung (21) ist, die zwischen der Kühlvorrichtung (23) und einer Widerstandserwärmungsvorrichtung (22) angebracht ist, die an dem Erwärmungszylinder (11) angebracht ist.

2. Einspritzvorrichtung gemäß Anspruch 1, wobei
die Schnecke (12) so angeordnet ist, dass sie innerhalb des Erwärmungszylinders (11) vorgeschoben und zurückgezogen werden kann; und
die Induktionserwärmungsvorrichtung (21) an einem Teil des Erwärmungszylinders (11) angebracht ist, der zumindest mit einer Zuführzone (Z1) der Schnecke (12) übereinstimmt, die vor der Kühlvorrichtung (23) in einem Zustand angeordnet ist, wo die Schnecke (12) zurückgezogen wird.

3. Einspritzvorrichtung gemäß Anspruch 2, wobei die Induktionserwärmungsvorrichtung (21) an einem Teil des Erwärmungszylinders (11) angebracht ist, der mit der Zuführzone (Z1) der Schnecke (12) übereinstimmt, die vor der Kühlvorrichtung (23) in einem Zustand angeordnet ist, in dem die Schnecke (12) vorgeschoben wird.

4. Einspritzvorrichtung gemäß Anspruch 1, wobei die Induktionserwärmungsvorrichtung (21) so angebracht ist, dass sie zumindest einen Teil mit einer Länge abdeckt, die einem Hub des Vorschiebens und Zurückziehens der Schnecke (12) entspricht.

5. Einspritzvorrichtung gemäß Anspruch 1, die ferner Folgendes aufweist:
einen Einspritzzylinder (91) und einen Kolben (92), der innerhalb des Einspritzzylinders (91) vorgeschoben und zurückgezogen wird,
wobei die Schnecke (12) angepasst ist, um sich zu drehen, wenn sich der Kolben (92) an einer Rückzugsposition befindet, und
die Induktionserwärmungsvorrichtung (21) an einem Teil des Erwärmungszylinders (11) angebracht ist, der vor der Kühlvorrichtung (23) gelegen ist und
einer Zuführzone (Z1) der Schnecke (12) entspricht.

6. Erwärmungsverfahren für eine Einspritzvorrichtung (10), die periodisch bzw. in Abständen ein Harz (17, 17a) innerhalb eines Erwärmungszylinders (11) durch eine Schnecke (12) in Übereinstimmung mit einem Einspritzformzyklus vorwärts führt, wobei das Verfahren die folgenden Schritte aufweist:
Erwärmen einer Zuführzone (Z1) der Schnecke (12) mittels einer Induktionserwärmungsvorrichtung (21), die an dem Erwärmungszylinder (11) angebracht ist, der eine Kühlvorrichtung (23) besitzt, die an einem hinteren Teil angebracht ist, wobei die Induktionserwärmungsvorrichtung (21) vor der Kühlvorrichtung (23) und benachbart zu der Kühlvorrichtung (23) angeordnet ist, wobei die Induktionserwärmungsvorrichtung (21) zwischen der Kühlvorrichtung (23) und einer Widerstandserwärmungsvorrichtung (22) angebracht ist, die an dem Erwärmungszylinder (11) angebracht ist.

7. Erwärmungsverfahren für eine Einspritzvorrichtung gemäß Anspruch 6, wobei die Schnecke (12) innerhalb des Erwärmungszylinders (11) vorgeschoben und zurückgezogen wird.

8. Erwärmungsverfahren für eine Einspritzvorrichtung gemäß Anspruch 6, wobei die Schnecke (12) einen Einspritzzylinder (91) und einen Kolben (92) umfasst, der sich innerhalb des Einspritzzylinders (92) vorschiebt und zurückzieht, und
sich die Schnecke (12) dreht, wenn der Kolben (92) zurückgezogen wird.

9. Erwärmungsverfahren für eine Einspritzvorrichtung gemäß Anspruch 6, wobei der Erwärmungsschritt Folgendes aufweist:
Erwärmen eines Teils mit einer Länge, die zumindest einem Hub des Vorschiebens und Zurückziehens der Schnecke (12) entspricht, und zwar mittels der Induktionserwärmungsvorrichtung (21).

## Revendications

1. Dispositif d'injection (10) qui fait avancer par intermittence une résine (17, 17a) dans un cylindre chauffant (11) à l'aide d'une vis (12) conformément à un cycle de moulage par injection, comprenant :
un dispositif de refroidissement (23) fixé à une partie arrière du cylindre chauffant (11) ; et
un dispositif de chauffage (21) fixé au cylindre chauffant (11) de manière à être situé en avant du dispositif de refroidissement (23) et à côté du dispositif de refroidissement (23),
**caractérisé en ce que** le dispositif de chauffage (21) est un dispositif de chauffage par induction (21) qui est fixé entre le dispositif de refroidissement (23) et un dispositif de chauffage par résistance (22) fixé au cylindre chauffant (11).

2. Dispositif d'injection selon la revendication 1, dans lequel :
la vis (12) est agencée pour avancer et reculer dans le cylindre chauffant (11) ; et
le dispositif de chauffage par induction (21) est fixé à une partie du cylindre chauffant (11) correspondant à au moins une zone d'alimentation (Z1) de la vis (12) qui est située en avant du dispositif de refroidissement (23) dans un état où la vis (12) est reculée.

3. Dispositif d'injection selon la revendication 2, dans lequel le dispositif de chauffage par induction (21) est fixé à une partie du cylindre chauffant (11) correspondant à la zone d'alimentation (Z1) de la vis (12) qui est située en avant du dispositif de refroidissement (23) dans un état où la vis (12) est avancée.

4. Dispositif d'injection selon la revendication 1, dans lequel le dispositif de chauffage par induction (21) est fixé de façon à couvrir au moins une partie ayant une longueur correspondant à une course d'avance et de recul de la vis (12).

5. Dispositif d'injection selon la revendication 1, comprenant en outre :
un cylindre d'injection (91) et un piston (92) qui avance et recule dans le cylindre d'injection (91),
dans lequel la vis (12) est adaptée pour tourner lorsque le piston (92) est situé dans une position reculée, et
le dispositif de chauffage par induction (21) est fixé à une partie du cylindre chauffant (11) située en avant du dispositif de refroidissement (23) et correspondant à une zone d'alimentation (Z1) de la vis (12).

6. Procédé de chauffage pour un dispositif d'injection (10) qui fait avancer par intermittence une résine (17, 17a) dans un cylindre chauffant (11) à l'aide d'une vis (12) conformément à un cycle de moulage par injection, le procédé comprenant les étapes suivantes :
chauffer une zone d'alimentation (Z1) de la vis (12) au moyen d'un dispositif de chauffage par induction (21) fixé au cylindre chauffant (11) ayant un dispositif de refroidissement (23) fixé dans sa partie arrière, le dispositif de chauffage par induction (21) étant situé en avant du dispositif de refroidissement (23) et à côté du dispositif de refroidissement (23), le dispositif de chauffage par induction (21) étant fixé entre le dispositif de refroidissement (23) et un dispositif de chauffage par résistance (22) fixé au cylindre chauffant (11).

7. Procédé de chauffage pour un dispositif d'injection selon la revendication 6, dans lequel la vis (12) avance et recule dans le cylindre chauffant (11).

8. Procédé de chauffage pour un dispositif d'injection selon la revendication 6, dans lequel la vis (12) comprend un cylindre d'injection (91) et un piston (92) qui avance et recule dans le cylindre d'injection (92) ; et
la vis (12) tourne lorsque le piston (92) recule.

9. Procédé de chauffage pour un dispositif d'injection selon la revendication 6, dans lequel l'étape de chauffage comprend le chauffage d'une partie ayant une longueur correspondant à au moins une course d'avance et de recul de la vis (12), au moyen du dispositif de chauffage par induction (21).
